# EUROPÄISCHE PATENTSCHRIFT

(11) **EP 3 893 342 B1**
(45) Veröffentlichungstag und Bekanntmachung des Hinweises auf die Patenterteilung: **20.08.2025**
(21) Anmeldenummer: 21167422.1
(22) Anmeldetag: 08.04.2021
(51) Int. Cl.: H02B 13/00, H02B 13/035

(54) **KABELANSCHLUSS**
CABLE CONNECTION
CONNECTEUR DE CÂBLE

(30) Priorität: 09.04.2020 DE 102020204620
(43) Veröffentlichungstag der Anmeldung: 13.10.2021
(73) Patentinhaber: Siemens Aktiengesellschaft, 80333 München (DE)
(72) Erfinder: Albert, Clemens, 63773 Goldbach (DE); Jung, Wolfgang, 60435 Frankfurt (DE)
(74) Vertreter: Siemens Patent Attorneys

(56) Entgegenhaltungen:
- CN-A- 108 493 827
- DE-A1- 102004 035 176
- DE-C1- 10 139 251
- DE-T2- 68 912 131

## Beschreibung

Die Erfindung betrifft einen Adapter für einen platzsparenden Kabelanschluss zum Anschließen von Kabeln an Sammelschienen von Schaltfeldern bzw. Schaltanlagen sowie ein Schaltfeld und einen Kabelanschluss.

Schaltanlagen und insbesondere Mittelspannungsschaltanlagen sind in vielen Fällen modular aus einzelnen Schaltfeldern aufgebaut, die über Sammelschienenkupplungen verfügen, die ein einfaches und schnelles Zusammenstellen der einzelnen Schaltfelder zu einem Schaltanlagenverbund ermöglichen. Die Sammelschienen der einzelnen Schaltfelder bilden dabei mittels der Sammelschienenkupplungen ein Sammelschienensystem.

Eine geeignete Sammelschienenkupplung ist beispielsweise aus der EP 1 999 831 B1 bekannt. Um die Anzahl verschiedener Bauteile und damit die Kosten möglichst gering zu halten, ist die Sammelschienenkupplung symmetrisch und die in den jeweiligen Schaltfeldern verbauten Teile sind gleich. Dies sind im Wesentlichen Isolierkörper, die einen konusförmigen Freiraum aufweisen, sowie Kontaktelemente, die sich durch die Isolierkörper erstrecken und am in der Schaltanlage befindlichen Ende Anschlussbohrungen zum Anschluss an Leitungen der Schaltfelder aufweisen und am anderen Ende kugelartig ausgebildet sind. Über die kugelartigen Enden der Kontaktelemente benachbarter Schaltfelder werden die Sammelschienen der Schaltfelder miteinander zu dem Sammelschienensystem verbunden.

In vielen Fällen erfolgt die Einspeisung in dieses Sammelschienensystem über ein Schaltgerät in einem der Schaltfelder - für diese Fälle ist das aus der EP 1 999 831 B1 bekannte System ohne weitere Modifikation gut geeignet.

Es gibt aber Fälle, in denen die Einspeisung in das Sammelschienensystem nicht über ein Schaltgerät erfolgt. Bislang wird, um die Anzahl verschiedener Bauteile und damit die Kosten möglichst gering zu halten, ein eigenes Schaltfeld, ein sogenanntes Kabelanschlussfeld, aufgebaut, das kein Schaltgerät beinhaltet, aber die gleichen Abmessungen wie ein Schaltfeld mit Schaltgerät aufweist. Dabei wird in der Praxis häufig schlicht das Schaltgerät durch Verbindungsschienen ersetzt. Die restliche elektrische und mechanische Ausrüstung des Kabelanschlussfeldes hingegen ist mit der elektrischen und mechanischen Ausrüstung eines Schaltfelds mit Schaltgerät vergleichbar.

Entsprechend sind Kabelanschlussfelder in der Gesamtbetrachtung wenig ökonomische Lösungen, da sie einerseits Platz benötigen, der nicht überall ohne weiteres vorhanden ist und dessen Bereitstellung zumindest Kosten verursacht, und da sie andererseits aufgrund ihrer relativ aufwendigen elektrischen und mechanischen Ausrüstung Kosten verursachen.

Alternativ zur Einspeisung in das Sammelschienensystem mittels Kabelanschlussfeld ist es denkbar, fest verbaute Kabelanschlussdurchführungen zum Einspeisen in die Sammelschiene(n) bzw. das Sammelschienensystem zu verwenden. Nachteilig dabei ist, dass ein mit solchen Durchführungen ausgerüstetes Schaltfeld um die Kabelanschlussdurchführungen breiter oder höher wäre und damit nicht wie ein normales Schaltfeld transportiert werden kann. Nicht nur Transportbehältnisse, Verpackungen, Transportfahrzeugausrüstungen und ähnliches sind dabei zu berücksichtigen, sondern auch Türbreiten und ähnliche, nicht (oder nur mit sehr hohem Aufwand) umgehbare mechanische Einschränkungen auf dem Weg zum und am Aufstellort.

Aus der CN 108 493 827 A ist eine Sammelschienenvorrichtung für gasisolierte Schaltanlagen bekannt, die eine Verbindung zwischen dem elektrischen Auslass des Hochdruckbehälters der Schaltanlage und einem Messschrank herstellt. Zur Vermeidung einer umständlichen Verkabelung wird dabei eine T-förmige Isolierhülse mit einer rechteckigen Kupfersammelschiene als Ausgangsstruktur am elektrischen Auslass des Hochdruckbehälters der Schaltanlage verwendet.

Aus der DE 689 12 131 T2 ist eine Vorrichtung zur zuverlässigen Verbindung eines elektrischen Hochspannungskabels mit einem elektrischen Gerät bekannt, wobei das Kabel einen axialen Leiter, eine Isolierung, eine Halbleiterschicht, einen Metallschirm und eine äußere Hülle aufweist und wobei die Vorrichtung es eventuell erlaubt, die Anwesenheit von Überspannungen oder Kurzschlüssen festzustellen. Ferner offenbart die DE 689 12 131 T2 ein Verfahren zur Verbindung einer solchen Vorrichtung mit einem Hochspannungskabel.

Aus der DE 10 2004 035176 A1 bzw. der EP 1 769 513 B1 ist eine ringförmige Koppelelektrode zum kapazitiven Spannungsabgriff innerhalb eines Isolierkörpers eines Bauteils bekannt.

DE 101 39 251 C1 offenbart eine Sammelschienenverbindung von einer Schaltanlage, insbesondere einer gasisolierten Mittelspannungsschaltanlage, zu einem luftisolierten Messfeld. Messfeldwand und Schaltfeldwand stehen nebeneinander und sind miteinander verschraubbar. In der Schaltfeldwand sitzt ein Isolierkörper, der einen Dichtkörper aus Isoliermaterial aufnimmt. Der Dichtkörper trägt eine einen Anschlusskontakt berührende Leitbeschichtung und umhüllt ein Kontaktstück, den Anschlusskontakt und einen Rundleiter und weist eine äußere Leitbeschichtung auf, die zur Feldsteuerung dient. Ein Befestigungsflansch umgreift den Dichtkörper zentrisch und dient der Fixierung des Dichtkörpers an der Messfeldwand.

Aufgabe der vorliegenden Erfindung ist es, einen verbesserten Kabelanschluss anzugeben.

Diese Aufgabe wird gelöst durch einen Adapter für einen Kabelanschluss, der einen Körper aus elektrisch isolierendem Material, insbesondere aus einem Gießharz, einem Duroplast oder einem Thermoplast aufweist, der einen Anschlusskontaktbolzen aus elektrisch leitfähigem Material trägt, wobei der Adapter an einem Schaltfeld montierbar ist. Schaltfeldseitig verfügt der Körper über eine Öffnung, deren Innengeometrie in einem Formschlussbereich mit einem Kupplungsstück der Innengeometrie einer Öffnung eines am Schaltfeld montierten Isolierkörpers in einem Formschlussbereich mit dem Kupplungsstück entspricht, so dass bei Montage des Adapters auf die Einbaurichtung des Kupplungsstücks nicht geachtet werden muss.

An der schaltfeldseitigen Adapteraußenfläche ist ein flächiger Schirm in Form einer metallischen Schicht oder eines metallischen Netzes angebracht, wobei der flächige Schirm zumindest das schaltfeldseitige Ende des Anschlusskontaktbolzens überdeckt.

Der Adapter weist eine oder mehrere Feldsteuerelektroden auf, wobei zumindest eine Feldsteuerelektrode ringförmig aus elektrisch leitendem Material gefertigt und in den Körper eingebettet ist. Ferner weist der Adapter zumindest eine weitere ringförmige Elektrode aus elektrisch leitendem Material auf, die in einer Ringnut des Körpers eingebettet ist, wobei die weitere ringförmige Elektrode ihrerseits eine Ringnut aufweist, die geeignet ist zur Aufnahme einer Abstütz- und Schirmvorrichtung, die am Schaltfeld montierbar und so ausgestaltet ist, dass sie im montierten Zustand den Adapter mechanisch abstützt.

Die Erfindung betrifft ferner einen Kabelanschluss mit einem derartigen Adapter sowie ein Schaltfeld mit einem solchen Kabelanschluss.

Ein wichtiger Vorteil eines solchen Kabelanschlusses liegt darin, dass der Kabelanschluss nach Aufbau des Schaltfeldes installiert werden kann und somit keine Veränderungen am Schaltfeld selbst erforderlich sind, insbesondere ändern sich dessen Dimensionen (anders als bei fest verbauten Kabelanschlussdurchführungen) nicht. Dabei ist der erfindungsgemäße Kabelanschluss deutlich günstiger realisierbar und benötigt weit weniger Raum als ein Kabelanschlussfeld.

In einem Ausführungsbeispiel ist dabei die ringförmige Feldsteuerelektrode über elektrisch leitfähige Zapfen mit der weiteren Elektrode elektrisch und mechanisch verbunden.

In einem weiteren Ausführungsbeispiel weist die ringförmige Feldsteuerelektrode einen aus dem Körper herausgeführten Erdungsanschluss auf.

Zur Reduzierung der für die Fertigung von Schaltanlagen benötigten Einzelteile kann in einer bevorzugten Ausgestaltung die aus der Patentschrift EP 1 769 513 B1 bekannte Koppelelektrode als ringförmige Feldsteuerelektrode verwendet werden.

Vorzugsweise ist ein Kupplungsstück des Kabelanschlusses rotationssymmetrisch bezüglich einer Achse und spiegelsymmetrisch bezüglich einer Ebene, die senkrecht auf der Achse steht. Das hat den Vorteil, dass beim Einbau des Kupplungsstücks die Orientierung bzw. Einbaurichtung nicht beachtet werden muss, d.h. die Installation des Kabelanschlusses wird einfacher. In Ausgestaltungen der Erfindung können dabei die Kupplungsstücke genutzt werden, die auch beim Verbinden von Schaltfeldern miteinander eingesetzt werden, wodurch sich die Anzahl verschiedener Bauteile nicht erhöht. Gleiches gilt in Ausgestaltungen der vorliegenden Erfindung für die Kontaktstücke.

Dabei kann das Kupplungsstück doppelkonusförmig ausgebildet sein. Dadurch und durch die bevorzugte Nutzung eines elastomerischen Kupplungsstücks wird die formschlüssige Verbindung mit dem Adapter und dem Isolierkörper begünstigt und (feuchtigkeits)dicht.

In Ausgestaltungen der vorliegenden Erfindung ist die metallische Schicht oder das metallische Netz und/oder zumindest eine der Feldsteuerelektroden geerdet.

In Ausgestaltungen der Erfindung weist der Adapter eine Außengeometrie für luftisolierte Anschlusskabel auf, insbesondere beispielsweise eine gerippte Oberfläche zur Verlängerung des Kriechwegs zwischen Anschlusskabel und Schaltfeldgehäuse. In Ausgestaltungen der vorliegenden Erfindung wird der Adapter mittels eines Spanndeckels am Schaltfeld montiert und/oder im montierten Zustand von einem Spanndeckel an das Schaltfeld gepresst.

In Ausgestaltungen der vorliegenden Erfindung wird der Adapter im montierten Zustand durch Schraubverbindungen mit dem Schaltfeld verbunden, um die Kabelkräfte besser aufnehmen zu können. Alternativ oder zusätzlich können mechanische Abstützungen verwendet werden, die in Ausgestaltungen zusätzlich der elektromagnetischen Abschirmung des Anschlusses dienen können.

Im folgenden wird die Erfindung anhand von Zeichnungen näher erläutert.
Fig. 1 zeigt eine schematische Schnittdarstellung eines montierten Kabelanschlusses gemäß einer Ausgestaltung, die nicht der Erfindung entspricht.
Fig. 2 zeigt den Adapter einer Ausgestaltung eines nicht erfindungsgemäßen Kabelanschlusses in perspektivischer Darstellung.
Fig. 3 zeigt den Adapter einer weiteren Ausgestaltung eines nicht erfindungsgemäßen Kabelanschlusses in perspektivischer Darstellung.
Fig. 4 zeigt eine perspektivische Darstellung einer Ausgestaltung der vorliegenden Erfindung mit zusätzlicher mechanischer Abstützung des Adapters.
Fig. 5 zeigt eine perspektivische Darstellung eines bevorzugten Montagesystems für einen Kabelanschluss gemäß einer bevorzugten Ausgestaltung der vorliegenden Erfindung.
Fig. 6 zeigt eine schematische Schnittdarstellung eines besonderen Adapters gemäß einer Ausgestaltung der vorliegenden Erfindung.
Fig. 7 zeigt eine perspektivische Darstellung einer bevorzugten Elektrodenanordnung für einen Adapter gemäß einer Ausgestaltung der vorliegenden Erfindung.

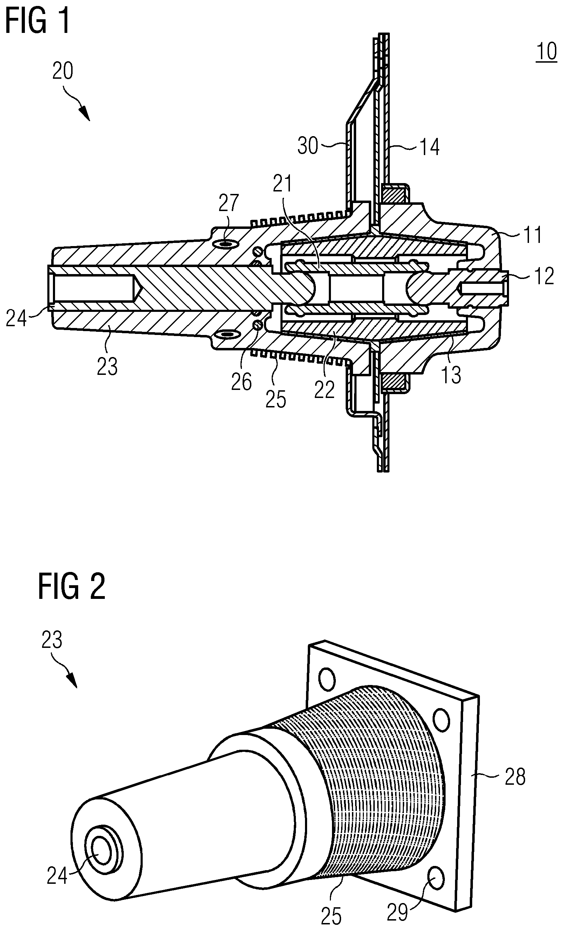

In Fig. 1 ist in einer Schnittdarstellung ein Schaltfeld 10 angedeutet, dessen eine äußere Begrenzung durch eine Wand 14 gebildet wird. An der Schaltfeldwand 14 ist eine Durchführung installiert, deren wesentliche Teile ein Isolierkörper 11 ein Schaltfeldkontaktbolzen 12 sind. An den Schaltfeldkontaktbolzen 12 wird am schaltfeldseitigen Ende (in Fig. 1: rechtes Ende des Schaltfeldkontaktbolzens 12) die Sammelschiene oder ein Kabel des Schaltfeldes angeschlossen (nicht dargestellt). Dieser Anschluss innerhalb des Schaltfeldes 10 und die Durchführung als solche sind bekannt und werden, wie bereits im Zusammenhang mit der EP 1 999 831 B1 erörtert, im Stand der Technik verwendet, um benachbarte Schaltfelder zu einem Schaltfeldverbund zusammenzufügen.

Der Isolierkörper 11 weist im in Fig. 1 dargestellten Ausführungsbeispiel einen konusförmigen Freiraum auf. Der sich (bezogen auf das Schaltfeld 10) von außen nach innen verjüngende Querschnitt dieses Freiraums ist durch Linie 13 im Schnittbild angedeutet. In diesem Freiraum befindet sich das zweite Ende des Schaltfeldkontaktbolzens 12, das kugelartig ausgebildet ist.

An das Schaltfeld 10 montiert ist ein erfindungsgemäßer Kabelanschluss 20. Dessen wichtigste Komponente ist ein Adapter 23, welcher der mechanischen Aufnahme eines auf der einen Seite des Adapters (in Fig. 1: linkes Ende des Adapters) anschließbaren Anschlusskabels (nicht dargestellt) und dessen elektrischer Kopplung an die Sammelschiene des Schaltfeldes 10, genauer gesagt an den Schaltfeldkontaktbolzen 12, dient. Der Adapter 23 ist aus elektrisch isolierendem Material hergestellt, beispielsweise aus einem Gießharz, einem Duroplast oder einem Thermoplast und trägt einen Anschlusskontaktbolzen 24 aus elektrisch leitfähigem Material. Das schaltfeldseitige (in Fig. 1: rechte) Ende des Anschlusskontaktbolzens ist kugelartig ausgebildet. Das kugelartige Ende des Anschlusskontaktbolzens 24 hat in bevorzugten Ausgestaltungen der vorliegenden Erfindung dieselben Dimensionen wie das kugelartige Ende des Schaltfeldkontaktbolzens 12.

Das andere Ende des Anschlusskontaktbolzens 24 ist an den vorgesehenen Kabelanschluss angepasst und kann beispielsweise zur Aufnahme von Steckerstiften oder (wie in Fig. 1 angedeutet) Schraubanschlüssen vorgesehen sein.

Der Adapter 23 ist mit Feldsteuer- und Schirmmitteln 25, 26, 27 ausgerüstet, um die vom Kontakt-/Verbindungsbereich emittierten elektrischen Felder zu beeinflussen: eine metallische Schicht oder ein metallisches Netz 25 ist auf den äußeren Umfang des Adapters 23 aufgebracht , siehe hierzu insbesondere Fig. 2, wobei die Schicht bzw. das Netz zumindest den schaltfeldseitigen Kontaktierungsbereich des Adapters 23 überdeckt bzw. umschließt. zusätzlich sind in die Adapterstruktur ringförmige Feldsteuerelektroden 26, 27 integriert , die zusätzlich zum Schirm 27 eine Abschirmung bewirken. In Ausführungsbeispielen der vorliegenden Erfindung sind die Ringelektroden 26, 27 und/oder der flächige Schirm 25 geerdet.

Die Innengeometrie der Öffnung des Adapters 23 entspricht zumindest in einem Formschlussbereich mit einem Kupplungsstück 22 der Innengeometrie der Öffnung des Isolierkörpers 11 im Formschlussbereich mit dem Kupplungsstück 22, d.h. der Adapter weist, wie der Isolierkörper 11, einen konusförmigen innenliegenden Freiraum auf. In dem sich (bezogen auf das Schaltfeld 10) von außen nach innen (in Fig. 1: von rechts nach links) verjüngenden Querschnitt dieses Freiraums befindet sich das kugelartige, schaltgeräteseitige Ende des Anschlussbolzens 24. Dabei muss nicht die komplette innere Geometrie des Adapters 23 der des Isolierkörpers 11 entsprechen. Es genügt, dass die innere, konusförmig zulaufende, Wandung in dem Bereich gleich ist, in dem sich im montierten Zustand das Kupplungsstück 22 befindet. Die kugelartigen Enden der Bolzen 12, 24 müssen sich beispielsweise nicht an der gleichen Stelle des Innenkonus befinden - wie in Fig. 1 gezeigt: das kugelartige Ende des Schaltfeldkontaktbolzens 12 ragt weiter in den Innenkonus des Isolierkörpers 11 hinein als das kugelartige Ende des Anschlussbolzens 24 in den Innenkonus des Adapters 23 hineinragt.

Die elektrische Verbindung zwischen Schaltfeldkontaktbolzen 12 und Anschlussbolzen 24 wird, wenn der Adapter 23 am Schaltfeld 10 montiert ist, durch ein aus einem elektrisch leitenden Material ausgebildetes Kontaktstück 21 bewirkt. Dieses umschließt die kugelartigen Enden der Bolzen 12, 24 und bildet somit die leitende Verbindung zwischen den Bolzen 12, 24 aus. Ein herkömmliches Kontaktstück, wie beispielsweise aus der EP 1 999 831 B1 bekannt, kann verwendet werden, wenn wie im bevorzugten Ausführungsbeispiel das kugelartige Ende des Anschlusskontaktbolzens 24 dieselben Dimensionen wie das kugelartige Ende des Schaltfeldkontaktbolzens 12 aufweist, wodurch sich vorteilhafterweise die Zahl verschiedener Bauteile nicht erhöht, sondern auf ein seriengefertigtes Kontaktstück zurückgegriffen werden kann. Anderenfalls ist ein an die verschiedenen Dimensionen angepasstes Kontaktstück zu verwenden.

Zur sicheren dielektrischen Abdichtung dieser elektrischen Verbindung wird ein Kupplungsstück 22 aus einem nichtleitenden Material verwendet, das einen Formschluss mit den entsprechenden Innengeometrien des Adapters 23 einerseits und des Isolierkörpers 11 andererseits bildet, wenn der Adapter am Schaltfeld 10 montiert ist. Wenn, wie im bevorzugten Ausführungsbeispiel, die Innengeometrien der Öffnungen des Isolierkörpers 11 und des Adapters 23 im vorgesehenen Formschlussbereich mit dem Kupplungsstück 22 einander entsprechen, kann ein spiegelsymmetrisches Kupplungsstück 22 verwendet werden, bei dem es insbesondere auf die Einbaurichtung nicht ankommt. Passend zu den bevorzugten Innenkonusgeometrien von Isolierkörper 11 und Adapter 23 ist das Kupplungsstück 22 im bevorzugten Ausführungsbeispiel im Wesentlichen doppelkonusförmig ausgebildet.

Das Kupplungsstück 22 ist entlang seiner Längs- bzw. Rotationsachse hohl. In diesem Hohlraum befinden sich, wenn der Kabelanschluss vollständig montiert ist, das Kontaktstück 21 (zumindest weit überwiegend) und in besonderen Ausführungsbeispielen auch die kugelartigen Enden des Anschlussbolzens 24 und/oder des Schaltfeldkontaktbolzens 12. Im bevorzugten Ausführungsbeispiel ist das Kupplungsstück 22 so gestaltet, dass im montierten Zustand keine Berührung zwischen dem Kupplungsstück 22 und einem der stromführenden Teile (Schaltfeldkontaktbolzen 12, Kontaktstück 21, Anschlussbolzen 24) stattfindet. Eine der einfachsten Realisierungsformen ist ein Kupplungsstück 22 mit im Wesentlichen zylindrischem Hohlraum, wobei wie in Fig. 1 dargestellt der Durchmesser des Hohlzylinders entlang der Rotationsachse variieren kann, beispielsweise um die Steifigkeit oder andere mechanische und/oder (di)elektrische Eigenschaften des Kupplungsstückes abhängig von der Position entlang der Rotationsachse gezielt festzulegen.

Das Kupplungsstück 22 wird bevorzugt aus einem Elastomer hergestellt, beispielsweise aus Silikon. Auch hinsichtlich des Kupplungsstücks 22 kann wegen der im bevorzugten Ausführungsbeispiel besonders darauf angepassten Form des Adapters 23 auf bereits vorhandene, seriengefertigte Kupplungsstücke, die üblicherweise zur Kopplung von Schaltfeldern verwendet werden, zurückgegriffen werden, wodurch sich die Zahl verschiedener Bauteile nicht erhöht.

Die Montage des Adapters 23 am Schaltfeld kann auf verschiedene Weise erfolgen. In Fig. 1 ist ein Adapter 23 dargestellt, der am schaltfeldseitigen Ende einen Flansch aufweist, welcher mittels eines Spanndeckels 30 an eine Seitenwand 14 des Schaltfeldes 10 gepresst wird.

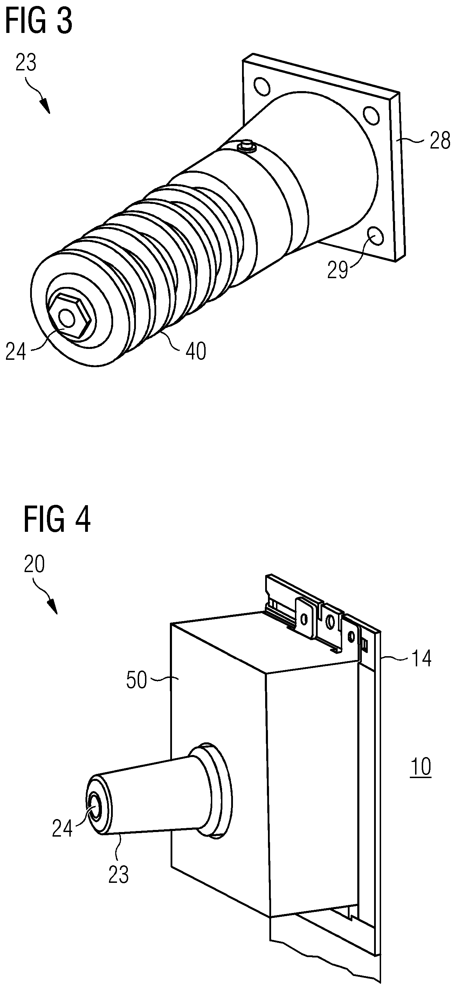

Fig. 2 und Fig. 3 zeigen jeweils einen derartigen Flansch 28.

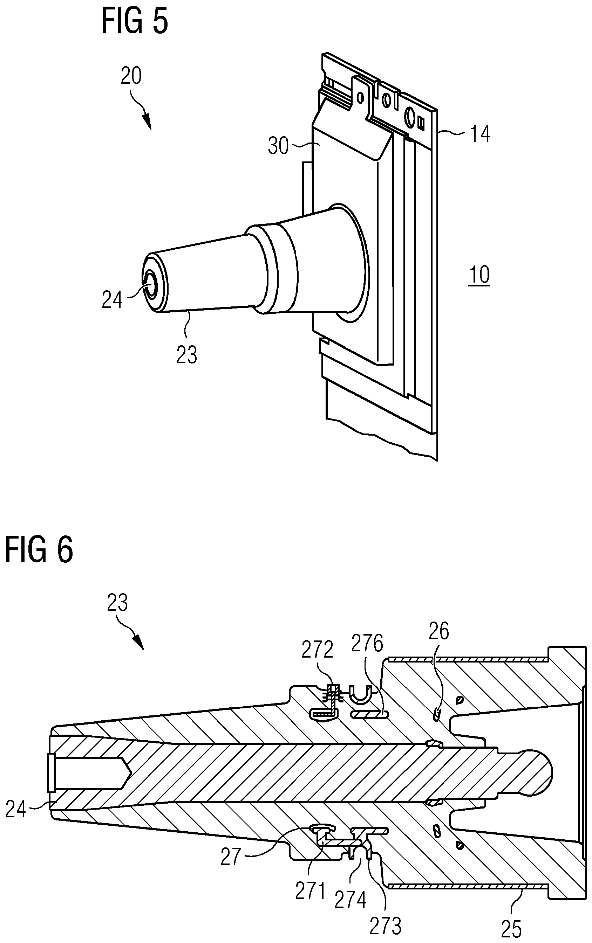

Der Adapter wird alternativ oder zusätzlich zur Befestigung mittels Spanndeckel mit dem Schaltfeld verschraubt. Hierzu können Bohrungen 29 im Flansch vorgesehen sein. Die Montage mittels Spanndeckel 30 ist in Fig. 5 mit weiteren Details gezeigt. Ein bevorzugter Spanndeckel 30 umschließt den Flansch 28 und presst diesen gegen die Schaltfeldwand 14. Der Spanndeckel 30 weist eine runde Aussparung zur Durchführung des Adapters 23 auf und kann beispielsweise entlang einer Spanndeckelkante (in Fig. 1 und Fig. 5 ist dies die untere Kante des Spanndeckels) in eine Nut eingesetzt werden und an der gegenüberliegenden Kante mittels einer Schraubverbindung an der Schaltfeldwand 14 befestigt und gespannt werden.

In Fig. 4 ist dargestellt, dass der Adapter 23 zusätzlich zur Befestigung mittels Spanndeckel und/oder Verschraubung durch eine Stützvorrichtung 50 gestützt wird, um die Kabelkräfte mit einem günstigeren Hebelarm aufzunehmen und besser an die Seitenwand 14 zu leiten. Stützvorrichtung 50 ist im wesentlichen quaderförmig mit einer runden Aussparung zur Aufnahme des Adapters und erstreckt sich in Längsrichtung des Adapters 23 vorzugsweise soweit dies das am kabelseitigen Ende des Adapters zu montierende Kabel sowie dessen Isolations- und Dichtungsvorrichtung (beispielsweise ein Stecker, der auf den Adapter 23 aufgesteckt wird) zulassen.

Die bereits erwähnte Fig. 2 zeigt ein Ausführungsbeispiel eines Adapters 23 in perspektivischer Darstellung. Der in Fig. 2 dargestellte Adapter weist am kabelseitigen Ende eine Außenkonusgeometrie gemäß EN 50181 Typ C auf. Für diesen Typ wird ein Anschlussbolzen 24 mit Innengewindeanschluss verwendet. Natürlich kann die Außengeometrie je nach Anwendungsfall gewählt werden, beispielsweise EN 50181 Typ A oder B für geringere Spannungen und/oder Ströme mit Steckanschluss im Anschlussbolzen. In Fig. 2 ist wie bereits erwähnt die metallische Schicht bzw. das metallische Netz 25 dargestellt, das in Ausführungsbeispielen der vorliegenden Erfindung zur Beeinflussung der vom Kontakt-/Verbindungsbereich emittierten elektrischen Felder dient.

Die ebenfalls bereits erwähnte Fig. 3 zeigt ein weiteres Ausführungsbeispiel eines Adapters 23 in perspektivischer Darstellung. Der in Fig. 3 dargestellte Adapter weist am kabelseitigen Ende eine gerippte Oberfläche mit Rippen 40 zur Verlängerung des Kriechwegs zwischen dem anschlussseitigen Ende des Anschlussbolzens 24 und dem schaltgeräteseitigen Ende des Adapters 23 auf. Diese Adapterform eignet sich besonders für luftisolierte Anschlüsse.

Fig. 6 zeigt ein weiteres Ausführungsbeispiel eines Adapters 23, wobei im Interesse einer kompakten Darstellung im folgenden nur die Unterschiede zu den vorstehend beschriebenen Ausführungsbeispielen erläutert werden. Der in Fig. 6 dargestellte Adapter weist am kabelseitigen Ende eine Außenkonusgeometrie gemäß EN 50181 Typ E bzw. IEEE386 Interface 13 auf. Auch der in Fig. 6 dargestellte Adapter 23 trägt schaltfeldseitig einen flächigen Schirm 25, hier in Form eines dünnwandigen Metallzylinders, da das schaltfeldseitige Ende des Adapters zylindrisch ausgestaltet ist und nicht konusförmig wie im Beispiel der Fig. 1 und Fig. 2.

Neben dem flächigen Schirm 25 weist der in Fig. 6 dargestellte Adapter eine die schaltfeldseitige, innenkonusförmige Öffnung des Adapterkörpers teilweise umschließende, aus elektrisch leitfähigem Material gefertigte Feldsteuerelektrode 26, die einen inneren Ring aufweist, der den Anschlusskontaktbolzen 24 formschlüssig umschließt sowie zwei konzentrische äußere Ringe, die über Stege mit dem inneren Ring verbunden sind. Diese Elektrode trägt somit das Potential des Anschlusskontaktbolzens.

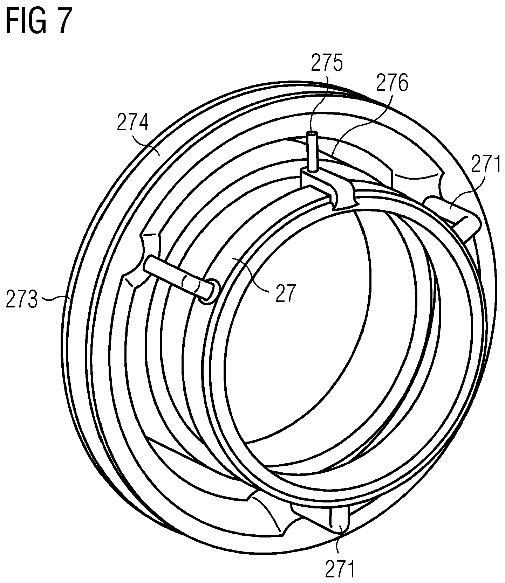

Ferner weist der in Fig. 6 dargestellte Adapter eine etwa mittig zwischen den beiden Enden angeordnete Feldsteuerelektrode 27 auf, die in Fig. 7 in perspektivischer Darstellung mit weiteren Details gezeigt ist. Elektrode 27 ist elektrisch leitfähig und vorzugsweise aus Metall gefertigt und im wesentlichen ringförmig konzentrisch zum Anschlusskontaktbolzen 24. Elektrode 27 ist in den Körper des Adapters integriert bzw. eingebettet, beispielsweise eingegossen. Elektrode 27 weist einen radialen Abstand zum Anschlusskontaktbolzen 24 und ist im Betriebszustand geerdet. Die Erdung kann dabei über ein bezüglich des Adapterkörpers nach außen führendes Anschlussnippel 275 mit Kontaktkörper 272 bewirkt werden, über die die im Innern des Adapterkörpers liegende Elektrode elektrisch leitend mit einem Erdpotential verbunden werden kann.

Elektrode 27 kann in Ausführungsbeispielen zweiteilig aus verschiedenen Materialien gefertigt sein, wie in Fig. 7 angedeutet, beispielsweise ein innerer Ring aus einem Elastomer und ein äußerer Ring aus Metall.

Ferner weist der in Fig. 6 dargestellte Adapter eine ebenfalls etwa mittig zwischen den beiden Enden angeordnete weitere ringförmige Elektrode 273 auf, die in einer Ringnut außen am Adapterkörpers angeordnet ist bzw. teilweise so in den Adapterkörper eingegossen ist, dass der Außendurchmesser der weiteren ringförmigen Elektrode an der entsprechenden Stelle den Außendurchmesser des Adapters bildet.

Die weitere ringförmige Elektrode 273 weist ihrerseits eine Ringnut 274 auf. Diese dient zur Aufnahme der Stützvorrichtung 50 wie in Fig. 4 dargestellt. Dabei greifen die Kanten der Stützvorrichtung in die Ringnut 274 ein. Da die weitere ringförmige Elektrode 273 bevorzugt aus leitfähigem Material gefertigt ist, kann so eine, ggf. zusätzliche, Erdung der Elektrode 273 bewirkt werden.

In Ausführungsbeispielen der Erfindung können, wie in Fig. 7 dargestellt, die beiden ringförmigen Elektroden 27 und 273 elektrisch und/oder mechanisch miteinander verbunden sein. Dies kann beispielsweise über drei gleichmäßig entlang des Umfangs der ringförmigen Elektrode 27 verteilte Zapfen 271 erfolgen, die in entsprechende Aufnahmen der weiteren ringförmigen Elektrode 271 gesteckt werden.

In bevorzugten Ausführungsbeispielen ist die weitere ringförmige Elektrode 273 aus einem Elastomer gefertigt und weist ihrerseits, wie in Fig. 7 dargestellt, einen im Adapterkörper liegenden Ring 276 zur Feldsteuerung auf.

Im komplett montierten Zustand des Adapters mit montierten Kabelanschlussstecker (nicht dargestellt) ergibt sich somit über die Elektroden 25, 273, 276, 27, die Stütz- und Schirmvorrichtung 50 und den Schirm des Kabelanschlusssteckers eine Schirmung bzw. Feldsteuerung entlang des gesamten Adapters.

Es sei darauf hingewiesen, dass zur Vereinfachung der Zeichnungen und der vorstehenden Beschreibung stets nur ein Adapter betrachtet wurde. Für typische Mittelspannungsanwendungen sind die Sammelschienen dreiphasig ausgeführt und entsprechend sind drei Durchführungen durch das Gehäuse des Schaltfeldes 10 vorhanden, an die drei Adapter gemäß der vorstehenden Beschreibung angeschlossen werden. In entsprechenden Ausführungsbeispielen werden diese mit drei separaten Spanndeckeln montiert, um den jeweils optimalen Anpressdruck zu erreichen. Es ist aber auch denkbar, einen für alle drei Adapter gemeinsamen Spanndeckel zu verwenden (nicht dargestellt). Ebenso ist es möglich, für jeden der drei Adapter eine separate Stütz- und Schirmvorrichtung wie in Fig. 4 dargestellt vorzusehen. In anderen Ausgestaltungen kann eine einzige Stützvorrichtung genutzt werden, die entsprechend alle drei Adapter überdeckt und drei Öffnungen zur Aufnahme der drei Adapter aufweist (nicht dargestellt).

Die vorliegende Erfindung ist insbesondere für Mittelspannungsanlagen geeignet. Dabei können gas- oder luftisolierte Schaltfelder genutzt werden, wobei die vorliegende, auf einen platzsparenden Kabelanschluss abzielende Erfindung besonders im Zusammenhang mit den kompakter realisierbaren gasisolierten Mittelspannungsschaltfeldern geeignet ist. Die Montage der Adapter kann dabei erfolgen, ohne dass Gasarbeiten durchgeführt werden müssen.

## Patentansprüche

1. Adapter (23) für einen Kabelanschluss (20) zum Anschluss eines Anschlusskabels an eine Sammelschiene eines Schaltfelds (10), der folgendes aufweist:
- einen Körper aus elektrisch isolierendem Material, der einen Anschlusskontaktbolzen (24) aus elektrisch leitfähigem Material trägt, wobei der Adapter am Schaltfeld montierbar ist;
- eine schaltfeldseitige Öffnung des Körpers, deren Innengeometrie in einem Formschlussbereich mit einem Kupplungsstück (22) der Innengeometrie einer Öffnung einer am Schaltfeld montierten Durchführung mit einem Isolierkörper (11) in einem Formschlussbereich mit dem Kupplungsstück (22) entspricht;
- einen an einer schaltfeldseitigen Adapteraußenfläche angebrachten flächigen Schirm (25) in Form einer metallischen Schicht oder eines metallischen Netzes, wobei der flächige Schirm zumindest das schaltfeldseitige Ende des Anschlusskontaktbolzens überdeckt;
- eine oder mehrere Feldsteuerelektroden (26, 27), wobei zumindest eine Feldsteuerelektrode (27) ringförmig aus elektrisch leitendem Material gefertigt ist,
**dadurch gekennzeichnet, dass**
- die zumindest eine ringförmige Feldsteuerelektrode (27) in den Körper eingebettet ist; und dass
- der Adapter zumindest eine weitere ringförmige Elektrode (273) aus elektrisch leitendem Material aufweist, die in einer Ringnut des Körpers eingebettet ist, wobei die weitere ringförmige Elektrode ihrerseits eine Ringnut (274) aufweist, die geeignet ist zur Aufnahme einer Abstütz- und Schirmvorrichtung (50), die am Schaltfeld montierbar und so ausgestaltet ist, dass sie im montierten Zustand den Adapter mechanisch abstützt.

2. Adapter nach Anspruch 1, bei dem die ringförmige Feldsteuerelektrode (27) über elektrisch leitfähige Zapfen (271) mit der weiteren Elektrode (273) elektrisch und mechanisch verbunden ist.

3. Adapter nach einem der vorhergehenden Ansprüche , dessen ringförmige Feldsteuerelektrode einen aus dem Körper herausgeführten Erdungsanschluss (272, 275) aufweist.

4. Adapter nach einem der Ansprüche 1 bis 3, aufweisend eine Außengeometrie für luftisolierte Anschlusskabel.

5. Kabelanschluss (20) zum Anschluss eines Anschlusskabels an eine Sammelschiene eines Schaltfelds (10), wobei das Schaltfeld eine Durchführung mit einem Isolierkörper (11) und einem Schaltfeldkontaktbolzen (12) aufweist, der Kabelanschluss aufweisend:
- einen Adapter (23) nach einem der vorhergehenden Ansprüche;
- ein Kontaktstück (21) aus elektrisch leitfähigem Material;
- ein Kupplungsstück (22) aus elektrisch isolierendem Material;
wobei wenn der Adapter (23) am Schaltfeld (10) montiert ist:
- das Kontaktstück (21) den Schaltfeldkontaktbolzen (12) elektrisch leitend mit dem Anschlusskontaktbolzen (24) verbindet; und
- das Kupplungsstück (22) einen Formschluss mit einer entsprechenden Öffnung des Adapters (23) einerseits und einer entsprechenden Öffnung des Isolierkörpers (11) andererseits bildet.

6. Kabelanschluss nach Anspruch 5, bei dem das Kupplungsstück rotationssymmetrisch bezüglich einer Achse und spiegelsymmetrisch bezüglich einer Ebene ist, die senkrecht auf der Achse steht.

7. Kabelanschluss nach Anspruch 6, bei dem das Kupplungsstück doppelkonusförmig ausgebildet ist.

8. Kabelanschluss nach einem der Ansprüche 5 bis 7, bei dem der Adapter im montierten Zustand von einem Spanndeckel (30) an das Schaltfeld gepresst wird.

9. Kabelanschluss nach einem der Ansprüche 5 bis 8, dessen Adapter im montierten Zustand durch Schraubverbindungen mit dem Schaltfeld verbunden ist.

10. Kabelanschluss nach einem der Ansprüche 5 bis 9 mit einer Abstütz- und Schirmvorrichtung (50) aus elektrisch leitfähigem Material, die am Schaltfeld montierbar und so ausgestaltet ist, dass sie im montierten Zustand den Adapter mechanisch abstützt und gemeinsam mit einer Schaltfeldwandung (14) aus elektrisch leitfähigem Material zumindest den elektrischen Kontaktierungsbereich zwischen Kontaktstück und Anschlusskontaktbolzen umschließt und so eine Abschirmung des von diesem Kontaktierungsbereich ausgehenden elektromagnetischen Feldes bewirkt.

11. Schaltfeld einer Mittelspannungsschaltanlage mit einer Durchführung mit einem Isolierkörper (11) und einem Schaltfeldkontaktbolzen (12) sowie einem Kabelanschluss (20) nach einem der Ansprüche 5 bis 10.

## Claims

1. Adapter (23) for a cable connection (20) for connecting a connection cable to a busbar of a switch panel (10), the adapter comprising the following:
- a body which is composed of electrically insulating material and supports a connection contact pin (24) composed of electrically conductive material, wherein the adapter can be fitted to the switch panel;
- a switch panel-side opening in the body, the internal geometry of this opening, in a positive-locking region with a coupling piece (22), corresponding to the internal geometry of an opening of a feedthrough which is fitted to the switch panel and has an insulating body (11) in a positive-locking region with the coupling piece (22);
- a planar shield (25) which is attached to a switch panel-side adapter outer surface and is in the form of a metal layer or a metal mesh, wherein the planar shield covers at least the switch panel-side end of the connection contact pin;
- one or more field control electrodes (26, 27), wherein at least one field control electrode (27) is produced in the shape of a ring from electrically conductive material,
**characterized in that**
- the at least one ring-shaped field control electrode (27) is embedded in the body; and **in that**
- the adapter has at least one further ring-shaped electrode (273) which is composed of electrically conductive material and is embedded in an annular groove of the body, wherein the further ring-shaped electrode in turn has an annular groove (274) which is suitable for receiving a supporting and shielding device (50) which can be fitted to the switch panel and is configured such that, in the fitted state, it mechanically supports the adapter.

2. Adapter according to Claim 1, in which the ring-shaped field control electrode (27) is electrically and mechanically connected to the further electrode (273) via electrically conductive pegs (271).

3. Adapter according to either of the preceding claims, the ring-shaped field control electrode of which has an earthing connection (272, 275) which is led out of the body.

4. Adapter according to any of Claims 1 to 3, having an external geometry for air-insulated connection cables.

5. Cable connection (20) for connecting a connection cable to a busbar of a switch panel (10), wherein the switch panel has a feedthrough having an insulating body (11) and a switch panel contact pin (12), the cable connection comprising:
- an adapter (23) according to any of the preceding claims;
- a contact piece (21) composed of electrically conductive material;
- a coupling piece (22) composed of electrically insulating material;
wherein when the adapter (23) is fitted to the switch panel (10):
- the contact piece (21) electrically conductively connects the switch panel contact pin (12) to the connection contact pin (24) ; and
- the coupling piece (22) forms a positively locking connection with a corresponding opening in the adapter (23) at one end and a corresponding opening in the insulating body (11) at the other end.

6. Cable connection according to Claim 5, in which the coupling piece is rotationally symmetrical with respect to an axis and mirror-symmetrical with respect to a plane that is perpendicular to the axis.

7. Cable connection according to Claim 6, in which the coupling piece is of double cone-shaped design.

8. Cable connection according to any of Claims 5 to 7, in which the adapter, in the fitted state, is pressed against the switch panel by a clamping cover (30).

9. Cable connection according to any of Claims 5 to 8, the adapter of which, in the fitted state, is connected to the switch panel by screw connections.

10. Cable connection according to any of Claims 5 to 9 comprising a supporting and shielding device (50) which is composed of electrically conductive material and can be fitted to the switch panel and is configured such that, in the fitted state, it mechanically supports the adapter and, together with a switch panel wall (14) composed of electrically conductive material, encloses at least the electrical contacting region between the contact piece and the connection contact pin and thus provides shielding against the electromagnetic field emanating from this contacting region.

11. Switch panel of a medium-voltage switchgear comprising a feedthrough having an insulating body (11) and a switch panel contact pin (12) and also comprising a cable connection (20) according to any of Claims 5 to 10.

## Revendications

1. Adaptateur (23) pour un connecteur de câble (20) pour le raccordement d'un câble de connexion à une barre omnibus d'un panneau de commande (10), comprenant les éléments suivants :
- un corps en matériau électriquement isolant portant un boulon de contact de connexion (24) en matériau électriquement conducteur, dans lequel l'adaptateur peut être monté sur le panneau de commande ;
- une ouverture du corps côté panneau de commande, dont la géométrie intérieure dans une zone à complémentarité de forme avec une pièce de couplage (22) correspond à la géométrie intérieure d'une ouverture d'une traversée montée sur le panneau de commande avec un corps isolant (11) dans une zone à complémentarité de forme avec la pièce de couplage (22) ;
- un écran plat (25) sous la forme d'une couche métallique ou d'un réseau métallique appliqué sur une surface extérieure de l'adaptateur côté panneau de commande, dans lequel l'écran plat recouvre au moins l'extrémité du boulon de contact de connexion côté panneau de commande ;
- une ou plusieurs électrodes de commande de champ (26, 27), dans lequel au moins une électrode de commande de champ (27) est réalisée en forme d'anneau avec un matériau électriquement conducteur,
**caractérisé en ce que**
- ladite au moins une électrode de commande de champ (27) en forme d'anneau est encastrée dans le corps ; et **en ce que**
- l'adaptateur comprend au moins une autre électrode en forme d'anneau (273) en matériau électriquement conducteur, qui est encastrée dans une rainure annulaire du corps, dans lequel l'autre électrode en forme d'anneau comprend de son côté une rainure annulaire (274) qui est adaptée pour recevoir un dispositif de support et de blindage (50) qui peut être monté sur le panneau de commande et qui est conçu de telle sorte qu'il supporte mécaniquement l'adaptateur à l'état monté.

2. Adaptateur selon la revendication 1, dans lequel l'électrode de commande de champ (27) en forme d'anneau est reliée électriquement et mécaniquement à l'autre électrode (273) par des tenons électriquement conducteurs (271).

3. Adaptateur selon l'une des revendications précédentes, dont l'électrode de commande de champ en forme d'anneau présente une borne de mise à la terre (272, 275) qui sort du corps.

4. Adaptateur selon l'une des revendications 1 à 3, présentant une géométrie extérieure pour câbles de connexion isolés par air.

5. Connecteur de câble (20) pour le raccordement d'un câble de connexion à une barre omnibus d'un panneau de commande (10), dans lequel le panneau de commande comprend une traversée avec un corps isolant (11) et un boulon de contact de panneau de commande (12), le connecteur de câble comprenant :
- un adaptateur (23) selon l'une des revendications précédentes ;
- une pièce de contact (21) en matériau électriquement conducteur ;
- une pièce de couplage (22) en matériau électriquement isolant ;
- dans lequel, lorsque l'adaptateur (23) est monté sur le panneau de commande (10) :
- la pièce de contact (21) relie de manière électriquement conductrice le boulon de contact de panneau de commande (12) au boulon de contact de connexion (24) ; et
- la pièce de couplage (22) forme une liaison de forme avec une ouverture correspondante de l'adaptateur (23) d'une part et une ouverture correspondante du corps isolant (11) d'autre part.

6. Connecteur de câble selon la revendication 5, dans lequel la pièce de couplage présente une symétrie de rotation par rapport à un axe et une symétrie spéculaire par rapport à un plan qui est perpendiculaire à l'axe.

7. Connecteur de câble selon la revendication 6, dans lequel la pièce de couplage est en forme de double cône.

8. Connecteur de câble selon l'une des revendications 5 à 7, dans lequel l'adaptateur est pressé à l'état monté par un couvercle de serrage (30) contre le panneau de commande.

9. Connecteur de câble selon l'une des revendications 5 à 8, dont l'adaptateur, à l'état monté, est relié au panneau de commande par des raccords vissés.

10. Connecteur de câble selon l'une des revendications 5 à 9 avec un dispositif de support et de blindage (50) en matériau électriquement conducteur, qui peut être monté sur le panneau de commande et qui est conçu de telle sorte qu'à l'état monté, il supporte mécaniquement l'adaptateur et, conjointement avec une paroi (14) du panneau de commande en matériau électriquement conducteur, entoure au moins la zone de contact électrique entre la pièce de contact et le boulon de contact de connexion et agit ainsi comme un blindage du champ électromagnétique émanant de cette zone de contact.

11. Panneau de commande d'une installation de commande à moyenne tension avec une traversée avec un corps isolant (11) et un boulon de contact de panneau de commande (12) ainsi qu'un connecteur de câble (20) selon l'une des revendications 5 à 10.
